(19) Europäisches Patentamt
European Patent Office
Office européen des brevets

(11) **EP 3 636 951 A1**

(12) **EUROPÄISCHE PATENTANMELDUNG**

(43) Veröffentlichungstag:
**15.04.2020 Patentblatt 2020/16**

(51) Int Cl.:
***F16F 7/10*** *(2006.01)*      ***F03D 80/80*** *(2016.01)*

(21) Anmeldenummer: **19197992.1**

(22) Anmeldetag: **18.09.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **18.09.2018 DE 102018007356**

(71) Anmelder: **SENVION GmbH**
**22297 Hamburg (DE)**

(72) Erfinder:
• **BOLLN, Sönke**
**25746 Heide (DE)**
• **SCHELLER, Jörn**
**24768 Rendsburg (DE)**
• **GEISLER, Jens**
**24768 Rendsburg (DE)**

(74) Vertreter: **Glawe, Delfs, Moll**
**Partnerschaft mbB von**
**Patent- und Rechtsanwälten**
**Postfach 13 03 91**
**20103 Hamburg (DE)**

(54) **VORRICHTUNG UND VERFAHREN ZUM DÄMPFEN VON SCHWINGUNGEN EINES BAUWERKS**

(57) Schwingungsdämpfer-Vorrichtung für ein Bauwerk (15), mit einer oder mehreren Führungsschienen (40, 41, 42), die jeweils eine in sich geschlossene Wegstrecke (21) definieren. Auf den Führungsschienen (40, 41, 42) sind eine erste Dämpfermasse (43) und eine zweite Dämpfermasse (44) angeordnet. Die erste Dämpfermasse (43) und die zweite Dämpfermasse (44) werden relativ zu den Führungsschienen (40, 41, 42) angetrieben, um einer Schwingung des Bauwerks (15) entgegenzuwirken.

Fig. 6

EP 3 636 951 A1

**Beschreibung**

Die Erfindung betrifft eine Schwingungsdämpfer-Vorrichtung für ein Bauwerk, insbesondere für einen Turm einer Windenergieanlage. Die Erfindung betrifft außerdem ein zugehöriges Verfahren zum Dämpfen von Schwingungen.

Ist ein Bauwerk einer Strömung ausgesetzt, insbesondere einer Windströmung, so kann es zu Verwirbelungen kommen, die sich in erster Linie auf der strömungsabgewandten Seite des Bauwerks bilden. Durch alternierende Wirbelablösungen können Kräfte entstehen, die in Querrichtung des Bauwerks wirken. Liegt die Frequenz der alternierenden Wirbelablösungen in derselben Größenordnung wie die Resonanzfrequenz des Bauwerks, so kann das Bauwerk in Schwingung versetzt werden, die quer zur Strömungsrichtung ausgerichtet sind. Auch andere Ursachen für Schwingungen kommen in Betracht, wie beispielsweise Bewegungen schwerer Komponenten oder die Böigkeit des anströmenden Winds. Schwingungen können bekanntlich zu Schäden an einem Bauwerk führen.

Im Stand der Technik sind verschiedene Varianten von Schwingungsdämpfern für Bauwerke beschrieben worden, WO 2008/145122 A1, DE 20 2016 005 517 U1, WO 2008/071428 A1, WO 2013/017244 A2.

Der Erfindung liegt die Aufgabe zugrunde, eine Schwingungsdämpfer-Vorrichtung und ein Schwingungsdämpfer-Verfahren vorzustellen, mit denen Schwingungen eines Bauwerks wirksam gedämpft werden können. Die Aufgabe wird gelöst mit den Merkmalen der unabhängigen Ansprüche. Vorteilhafte Ausführungsformen sind in den Unteransprüchen angegeben.

Die erfindungsgemäße Schwingungsdämpfer-Vorrichtung umfasst eine oder mehrere Führungsschienen, die jeweils eine in sich geschlossene Wegstrecke definieren. Auf den Führungsschienen sind eine erste Dämpfermasse und eine zweite Dämpfermasse angeordnet. Umfasst ist außerdem ein Antrieb, um die erste Dämpfermasse und die zweite Dämpfermasse entlang den Führungsschienen anzutreiben.

Indem die Führungsschienen sich entlang einer geschlossenen Wegstrecke erstrecken, gibt es bestimmte Abschnitte der Führungsschiene, auf denen der Schwingung des Bauwerks durch eine Bewegung der Dämpfermassen entgegengewirkt werden kann. Mit dem Antrieb können die Dämpfermasse so in Bewegung versetzt werden, dass sie sich zu geeigneten Zeitabschnitten entlang dieser Abschnitte der Führungsschienen bewegen und so die Schwingung des Bauwerks dämpfen. Mit dem Antrieb können die Dämpfermassen beschleunigt werden, abgebremst werden oder auf einer konstanten Geschwindigkeit gehalten werden.

In einer Ausführungsform der Erfindung ist die erste Dämpfermasse auf einer ersten Führungsschiene angeordnet und die zweite Dämpfermasse auf einer zweiten Führungsschiene angeordnet. In einer alternativen Ausführungsform sind die erste Dämpfermasse und die zweite Dämpfermasse auf einer gemeinsamen Führungsschiene angeordnet.

Die mit der ersten Führungsschiene definierte Wegstrecke und/oder die mit der zweiten Führungsschiene definierte Wegstrecke können sich innerhalb einer Ebene erstrecken. In einer Ausführungsform ist die Ebene der ersten Führungsschiene parallel zu der Ebene der zweiten Führungsschiene. Zwingend ist dies jedoch nicht, von der Erfindung umfasst sind auch Ausführungsformen, bei denen die erste Wegstrecke und/oder die zweite Wegstrecke sich nicht innerhalb einer Ebene erstrecken, sowie Ausführungsformen, bei denen die erste Ebene nicht parallel zu der zweiten Ebene ist. Als geschlossen wird eine Wegstrecke bezeichnet, wenn eine Vorwärts-Bewegung entlang der Wegstrecke zum Ausgangspunkt zurückführt, sodass die Wegstrecke ohne anzuhalten mehrfach durchlaufen werden kann.

Die erste Führungsschiene und/oder die zweite Führungsschiene können eine kreisförmige Wegstrecke definieren. Dies erleichtert das Ansteuern der Dämpfermasse sowie das gezielte Dämpfen von Schwingungen, die in unterschiedlichen Richtungen wirken.

Die Dämpfermassen können entlang den Führungsschienen geführt sein. Die Führung kann insbesondere so gestaltet sein, dass nur Bewegungen der Dämpfermassen entlang der durch die Führungsschienen definierten Wegstrecke zugelassen sind, während alle anderen Bewegungen der Dämpfermasse relativ zu der Führungsschiene ausgeschlossen sind. Beispielsweise können die Dämpfermassen auf den Führungsschienen rutschen oder über Rollen auf der ersten Führungsschiene ablaufen.

Die Schwingungsdämpfer-Vorrichtung kann eine Steuereinheit umfassen, mit der die erste Dämpfermasse und/oder die zweite Dämpfermasse so angesteuert werden können, dass sie sich entlang umlaufenden Bahnen auf der jeweiligen Führungsschiene bewegen. Dabei kann die Bewegungsrichtung der ersten Dämpfermasse gegensinnig zur Bewegungsrichtung der zweiten Dämpfermasse sein. Die Bewegung der Dämpfermassen kann so gesteuert werden, dass Abschnitte der Wegstrecke, in denen die Dämpfermassen sich in eine gemeinsame Richtung bewegen, parallel zur Richtung der Schwingung ausgerichtet sind. Abschnitte der Wegstrecke, in denen die Bewegungen der Dämpfermassen einander entgegengesetzt sind, können senkrecht zur Richtung der Schwingung ausgerichtet sein. Von der Erfindung umfasst sind auch Ausführungsformen, bei denen die Dämpfermasse sich gleichsinnig entlang umlaufender Bahnen bewegen. Die Dämpferwirkung kann sich dann aus Geschwindigkeitsunterschieden während eines Umlaufs bzw. Geschwindigkeitsunterschieden zwischen den beiden Dämpfermassen ergeben.

Von der Erfindung umfasst sind auch Ausführungsformen, bei denen die erste Dämpfermasse so angesteuert wird, dass sie sich in einem Wechsel zwischen Vorwärtsbewegungen und Rückwärtsbewegungen entlang einem Abschnitt der ersten Führungsschiene bewegt. Der Abschnitt kann so ausgewählt sein, dass die Bewegung der ersten Dämpfermasse eine zu der Schwingungsrichtung parallele Komponente hat und weiter vorzugsweise so parallel wie möglich zu der Schwingungsrichtung ausgerichtet ist. Die zweite Dämpfermasse kann entsprechend angesteuert werden. Dabei können die Vorwärts- und Rückwärtsbewegungen der beiden Dämpfermassen relativ zur Schwingungsrichtung miteinander synchronisiert sein. Die erste Dämpfermasse und die zweite Dämpfermasse können auf zwei Seiten einer Ebene angeordnet sein, die durch die Schwingungsrichtung und eine zentrale Achse des Bauwerks gebildet wird. Die erste Dämpfermasse und die zweite Dämpfermasse können auf einer gemeinsamen Führungsschiene oder auf zwei separaten Führungsschienen angeordnet sein.

Die Schwingungsdämpfer-Vorrichtung kann mehr als zwei Dämpfermassen umfassen. Dabei kann jeder Dämpfermasse eine eigene Führungsschiene zugeordnet sein. In einer alternativen Ausführungsform sind wenigstens zwei Dämpfermassen auf einer Führungsschiene angeordnet.

In einer Ausführungsform umfasst die Schwingungsdämpfer-Vorrichtung vier Dämpfermassen. Dabei können jeweils zwei Dämpfermassen einer gemeinsamen Führungsschiene zugeordnet sein. Die Dämpfermassen können so angesteuert werden, dass zwei Dämpfermassen sich mit übereinstimmender Geschwindigkeit bewegen, wobei die Bewegungsrichtung vorzugsweise gleich ist und wobei weiter vorzugsweise der Abstand zwischen den beiden Dämpfermassen einstellbar ist. Durch Einstellen des Abstands kann die Amplitude der zum Dämpfen wirksamen Kraft stufenlos von null bis zu einem Maximalwert geregelt werden, in dem der Abstand zwischen den Massen variiert wird. Fahren zwei Massen mit 180° Abstand zueinander, so hebt sich die Wirkung ihrer Zentrifugalkräfte auf. Je näher sie zusammenrücken, desto größer wird ihre gemeinsame Wirkung in die gleiche Richtung. Die beiden anderen Dämpfermassen können auf entsprechende Weise angesteuert werden, wobei die Bewegungsrichtung dieser beiden Dämpfermasse gegensinnig zu den ersten beiden Dämpfermassen sein kann.

Die Schwingungsdämpfer-Vorrichtung kann drei übereinander angeordnete Führungsschienen umfassen, wobei die Dämpfermasse auf der mittleren Führungsschiene größer ist als die Dämpfermasse auf der unteren Führungsschiene und/oder größer ist als die Dämpfermasse auf der oberen Führungsschiene. Insbesondere kann die Masse der auf der mittleren Führungsschiene geführten Dämpfermassen genauso groß sein wie die Summe der Dämpfermassen auf der oberen Führungsschiene und der unteren Führungsschiene. Die Dämpfermasse auf der oberen Führungsschiene kann gleich groß sein wie die Dämpfermasse auf der unteren Führungsschiene. Eine solche Anordnung ist geeignet, um unerwünschte Krempelmomente auszugleichen.

Der Antrieb für die Dämpfermassen kann nach Art eines Linearmotors gestaltet sein, der sich entlang der betreffenden Führungsschiene erstreckt. Der Antrieb kann eine Mehrzahl von strukturell getrennten Antriebseinheiten umfassen, wobei insbesondere jeder Führungsschiene eine Antriebseinheit zugeordnet sein kann. Der Begriff Linearmotor wird hier verwendet, auch wenn die durch die Führungsschiene vorgegebene Wegstrecke nicht linear ist. Beispielsweise können entlang der Antriebsstrecke mehrere Magneten mit abwechselnder Polung angeordnet sein. Die Magneten können mit der Führungsschiene verbunden sein. In der angetriebenen Dämpfermasse kann ein alternierendes elektromagnetisches Feld erzeugt werden, sodass die Dämpfermasse sich unter abwechselnder Anziehung und Abstoßung von den Magneten entlang der Antriebsstrecke bewegt. Jede Führungsschiene mit zugehörigen Dämpfermassen kann mit einem solchen Antrieb nach Art eines Linearmotors ausgestattet sein. Die Führungsschienen, die Dämpfermassen und/oder der Antrieb können mit einer Schutzabdeckung versehen sein, um einen unbeabsichtigten Kontakt mit den Dämpfermassen zu verhindern.

Der Schwingungsdämpfer kann eine Steuereinheit umfassen, so dass die Bewegung der Dämpfermassen in Abhängigkeit von dem Schwingungszustand des Bauwerks angesteuert wird. In der Steuereinheit kann eine Information über den Schwingungszustand des Bauwerks verarbeitet werden, um die Dämpfermasse so anzutreiben, dass sie der Schwingung des Bauwerks entgegenwirkt. Der Schwingungsdämpfer kann ein oder mehrere Sensoren umfassen, mit denen eine Information über den Schwingungszustand des Bauwerks gewonnen wird. Möglich ist auch, dass der Schwingungszustand des Bauwerks eine Eingangsinformation ist, die dem Schwingungsdämpfer zugeführt wird.

In der Steuereinheit kann eine Rechenvorschrift hinterlegt sein, mit der die Information über den Schwingungszustand des Bauwerks verarbeitet wird, um ein Steuersignal für den Antrieb der Dämpfermassen zu erzeugen. In einer Ausführungsform ist in der Steuereinheit eine erste Rechenvorschrift hinterlegt, die zur Anwendung bei einem Bauwerk im unbelasteten Zustand bestimmt ist, und eine zweite Rechenvorschrift hinterlegt, die zur Anwendung bei demselben Bauwerk im belasteten Zustand bestimmt ist.

Die Erfindung betrifft außerdem ein Bauwerk, das mit einer solchen Schwingungsdämpfer-Vorrichtung ausgestattet ist. Bei dem Bauwerk kann es sich um ein turmartiges Bauwerk handeln, das eine im Vergleich zur Grundfläche große Höhe hat. In Betracht kommen beispielsweise Türme, Maste, Schornsteine, Hochhäuser, Pylone, Träger von Brücken. In einer Ausführungsform ist das Bauwerk ein Turm einer Windenergieanlage. Die Windenergieanlage kann eine Gondel umfassen, die auf dem oberen Ende des Turms angeordnet ist und die einen Rotor trägt, der durch den Wind in Drehung versetzt wird. Die Gondel kann relativ zu dem Turm drehbar sein, um den Rotor in Windrichtung ausrichten zu können.

Die erfindungsgemäße Schwingungsdämpfer-Vorrichtung kann in einem Windenergieanlagen-Turm in einem Zwischenzustand bei der Errichtung der Windenergieanlage verwendet werden. In dem Zwischenzustand kann der Turm bereits teilweise oder vollständig errichtet sein, die Gondel jedoch noch nicht auf dem Turm aufgesetzt sein. Dieser Zwischenzustand entspricht einem unbelasteten Zustand des Bauwerks. Zusätzlich oder alternativ dazu kann die Schwingungsdämpfer-Vorrichtung in einer fertigen Windenergieanlage verwendet werden, bei der eine Gondel auf den Turm aufgesetzt ist (belasteter Zustand). Im belasteten Zustand hat der Turm ein anderes Schwingungsverhalten als im unbelasteten Zustand. Die Schwingungsdämpfer-Vorrichtung kann verwendet werden, um Schwingungen zu dämpfen, die durch Einflüsse des Winds und/oder durch den Betrieb von Komponenten der Windenergieanlage wie beispielsweise Rotor, Generator, Getriebe hervorgerufen wurden.

Die Schwingungsdämpfer-Vorrichtung kann so mit dem Bauwerk verbunden sein, dass eine von der ersten Führungsschiene aufgespannte Ebene senkrecht zu einer vertikalen Achse des Bauwerks ausgerichtet ist. Die vertikale Achse des Bauwerks kann zusammenfallen mit einem Mittelpunkt, um den herum sich die erste Führungsschiene erstreckt. Entsprechendes kann für die zweite Führungsschiene gelten.

Die erste Führungsschiene und/oder die zweite Führungsschiene können sich entlang einer Wand des Bauwerks erstrecken. Bei einem Bauwerk mit kreisförmigem Querschnitt ergibt sich dann eine kreisförmige Wegstrecke, die durch die Führungsschiene definiert wird. Durch die Führungsschiene kann ein Innenraum umschlossen sein, der frei von Komponenten der Schwingungsdämpfer-Vorrichtung ist. Dieser Innenraum kann genutzt werden für andere Zwecke des Bauwerks. Bei einem Turm einer Windenergieanlage kann sich innerhalb des Innenraums beispielsweise eine Befahranlage erstrecken, ein Kabel kann in dem Innenraum geführt sein und/oder es kann eine Plattform ausgebildet sein, auf der Personen arbeiten können. Im Unterschied dazu wird der Innenraum bei herkömmlichen Schwingungsdämpfer-Vorrichtungen häufig stark eingeschränkt.

Die erste Führungsschiene und/oder die zweite Führungsschiene können sich entlang einer Innenwand des Bauwerks erstrecken. Dies hat den Vorteil, dass die Komponenten der Schwingungsdämpfer-Vorrichtung durch die Wand des Bauwerks vor Witterungseinflüssen geschützt werden können. In einer alternativen Ausführungsform erstrecken die erste Führungsschiene und/oder die zweite Führungsschiene sich entlang einer Außenwand des Bauwerks. Damit wird erreicht, dass der im Innenraum des Bauwerks zur Verfügung stehende Raum nicht durch die Komponenten der Schwingungsdämpfer-Vorrichtung beeinträchtigt wird.

Die Erfindung betrifft außerdem ein Verfahren zum Dämpfen von Schwingungen eines Bauwerks, mit einer ersten Dämpfermasse und mit einer zweiten Dämpfermasse, wobei die erste Dämpfermasse und die zweite Dämpfermasse auf einer oder mehreren Führungsschienen angeordnet sind, wobei die Führungsschienen jeweils eine in sich geschlossene Wegstrecke definieren, und wobei die erste Dämpfermasse und die zweite Dämpfermasse relativ zu den Führungsschienen angetrieben werden, um einer Schwingung des Bauwerks entgegenzuwirken.

Das Verfahren kann mit weiteren Merkmalen fortgebildet werden, die im Zusammenhang der erfindungsgemäßen Vorrichtung beschrieben sind. Die Vorrichtung kann mit weiteren Merkmalen fortgebildet werden, die im Zusammenhang des erfindungsgemäßen Verfahrens beschrieben sind.

Die Erfindung wird nachfolgend unter Bezugnahme auf die beigefügten Zeichnungen anhand vorteilhafter Ausführungsformen beispielhaft beschrieben. Es zeigen:

Fig. 1:     eine Seitenansicht einer Windenergieanlage;

Fig. 2:     einen Zwischenzustand beim Errichten der Windenergieanlage aus Fig. 1;

Fig. 3:     die Ansicht gemäß Fig. 2 bei einer fertig errichteten Windenergieanlage;

Fig. 4:     eine schematische Darstellung der Funktionsweise eines erfindungsgemäßen Schwingungsdämpfers;

Fig. 5:     ein Detail eines erfindungsgemäßen Schwingungsdämpfers in vergrößerter Darstellung;

Fig. 6:     eine schematische Darstellung eines erfindungsgemäßen Schwingungsdämpfers;

Fig. 7 - 10:     die Ansicht gemäß Fig. 6 bei weiteren Ausführungsformen der Erfindung;

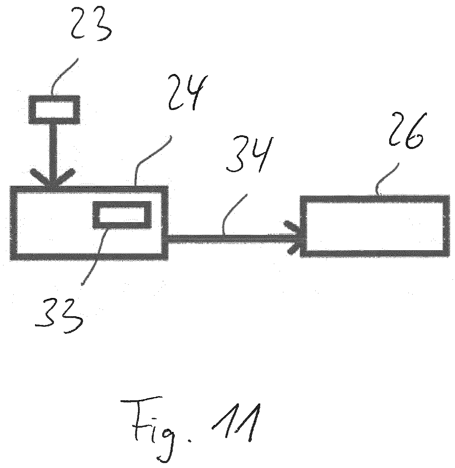

Fig. 11:     ein Blockdiagramm eines erfindungsgemäßen Schwingungsdämpfers.

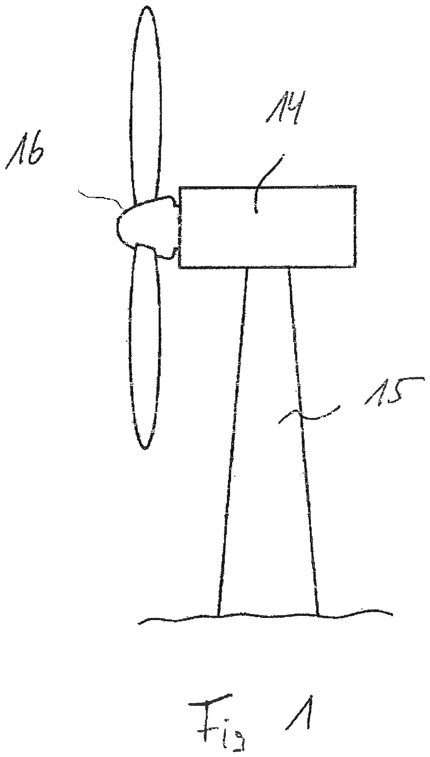

Bei einer in Fig. 1 gezeigten Windenergieanlage ist eine Gondel 14 drehbar auf einem Turm 15 angeordnet. Die Gondel 14 trägt einen Rotor 16, der durch den Wind in Drehung versetzt wird. Der Rotor 16 treibt über eine Rotorwelle einen Generator an, um elektrische Energie zu erzeugen. Die elektrische Energie wird über einen Umrichter und einen Transformator in ein windparkinternes Netz geleitet und von dort in ein elektrisches Übertragungsnetz eingespeist.

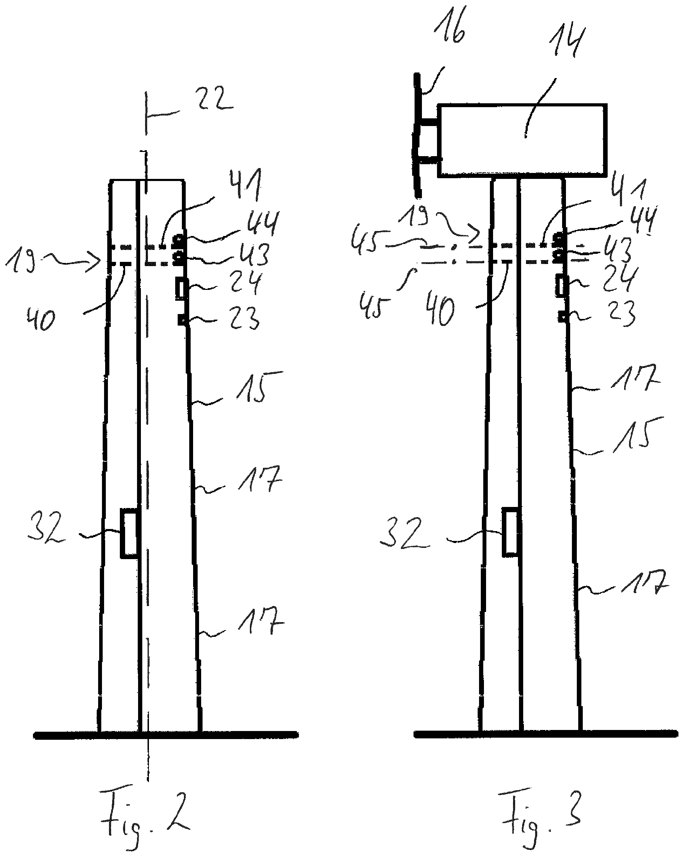

Beim Errichten einer solchen Windenergieanlage wird gemäß Fig. 2 zunächst der Turm 15 aufgestellt, indem mehrere Turmsegmente 17 übereinander angeordnet werden. Anschließend werden die Gondel 14 und der Rotor 16 auf den Turm 15 aufgesetzt. Mit dem Aufsetzen der Gondel 14 und des Rotors 16 auf den Turm 15 werden die Schwingungseigenschaften verändert.

Gemäß der Erfindung ist in einem der oberen Turmsegmente 17 des Turms 15 ein Schwingungsdämpfer 19 angeordnet, der dazu ausgelegt ist, die Schwingungen des Turms 15 zu dämpfen.

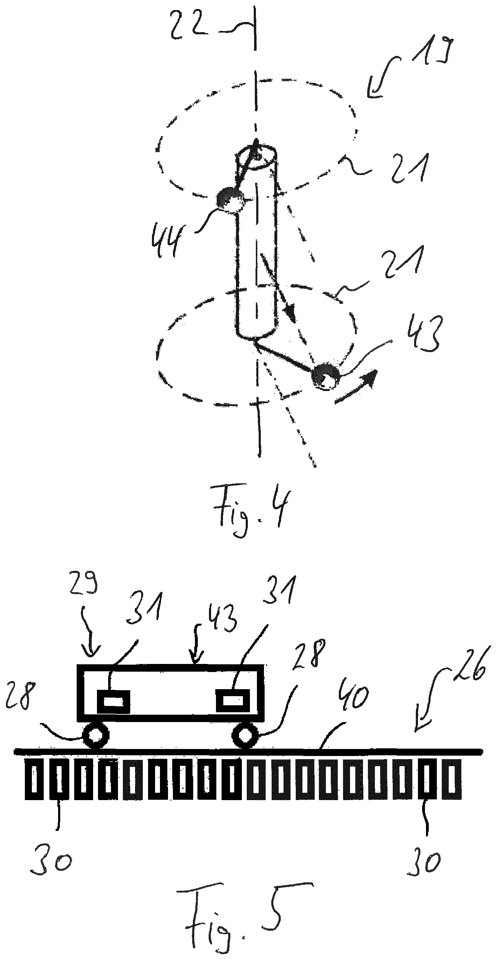

Das Grundprinzip des Schwingungsdämpfers 19 ist in Fig. 4 dargestellt. Der Schwingungsdämpfer 19 ist ein aktives System und besteht aus zwei entlang jeweils einer umlaufenden Bahn 21 gegensinnig umlaufenden Dämpfermassen 43, 44. Die Ebenen, in denen sich die beiden Dämpfermassen 43, 44 bewegen, können parallel zueinander liegen. Die durch die Bewegung der Dämpfermassen 43, 44 entstehenden Kräfte werden zur Dämpfung von Turmschwingungen genutzt. Bei einer auf die zentrale Achse 22 bezogenen konstanten Umlaufgeschwindigkeit ω der Dämpfermassen 43, 44 entsteht eine harmonische Dämpfungskraft $F_c$ mit der Amplitude

$$F_c = 2 \cdot m_c \cdot r_c \cdot \omega^2.$$

Dabei bezeichnet $m_c$ die Masse einer Dämpfermasse 43, 44 und $r_c$ den radialen Abstand zwischen der Dämpfermasse 43, 44 und der zentralen Achse 22.

Gemäß Fig. 2 und 3 werden die Turmschwingungen mit Sensoren 23 gemessen und die Schwingrichtung und -frequenz in einer Steuereinheit 24 identifiziert. Darauf basierend berechnet die Steuereinheit 24 Stellgrößen für einen Antrieb 26, mit denen die Bewegung der Dämpfermassen 43, 44 entlang den umlaufenden Bahnen 21 angetrieben wird. Zu den Stellgrößen der Elektromotoren können insbesondere die auf die Dämpfermassen 43, 44 auszuübende Beschleunigungskraft/Bremskraft bzw. die entsprechenden Bewegungsgrößen der Dämpfermassen 43, 44 gehören. Das System arbeitet nach Inbetriebsetzung selbstständig.

In dem Ausführungsbeispiel gemäß Fig. 2 werden die umlaufenden Bahnen 21 durch zwei Führungsschienen 40, 41 definiert, die sich in zueinander parallelen Ebenen 45 erstrecken. Jede Führungsschiene 40, 41 erstreckt sich entlang der Innenwand des Turms 15 und bildet eine in sich geschlossene Wegstrecke in Form einer kreisförmigen Bahn 21, die mit der zentralen Achse 22 des Turms einen rechten Winkel einschließt. Die Führungsschienen 40, 41 umschließen einen kreisförmigen Freiraum, innerhalb dessen ein Fahrkorb 32 nach oben und unten fahren kann.

Die beiden Dämpfermasse 43, 44 haben jeweils die Form eines Wagens 29, der über Rollen 28 auf der Führungsschiene 40, 41 geführt ist, siehe Fig. 5. Die Achsen der Rollen 28 können mit der Bewegungsrichtung einen rechten Winkel einschließen. Zwischen dem Wagen 29 und der Führungsschiene 40, 41 kann eine formschlüssige Verbindung vorgesehen sein, sodass der Wagen 29 nicht von der Führungsschiene 40, 41 abgehoben werden kann.

Der Antrieb 26, mit dem der Wagen 29 entlang der Führungsschiene 40 angetrieben wird, ist gemäß Fig. 5 nach Art eines Linearmotors gestaltet. Entlang der Führungsschiene 40, 41 ist eine Mehrzahl von Magneten 30 mit abwechselnder Polarität angeordnet, die mit Spulen 31 in dem Wagen 29 zusammenwirken. Durch geeignete Ansteuerung der Spulen 31 kann der Wagen 29 entlang der Führungsschiene 40, 41 beschleunigt bzw. abgebremst werden.

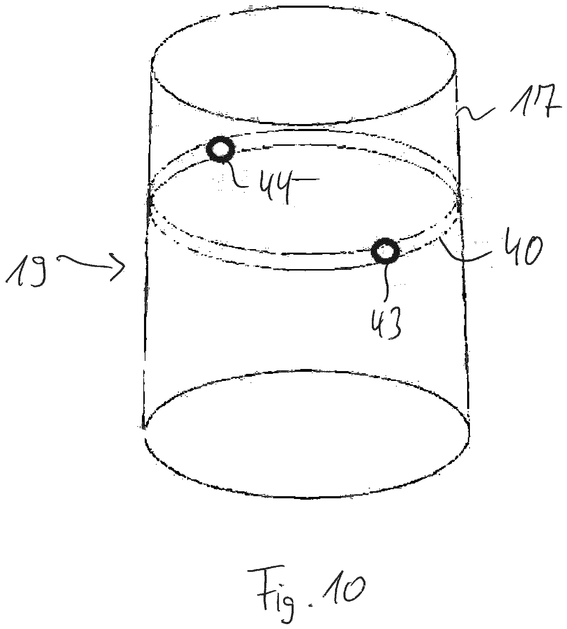

Die Messwerte des Schwingungssensors 23 werden der Steuereinheit 24 des Schwingungsdämpfers 19 zugeführt, siehe Fig. 10. Die Steuereinheit 24 umfasst einen Speicher 33, in dem eine Rechenvorschrift hinterlegt ist, gemäß der aus den Messwerten des Schwingungssensors 23 ein Steuersignal 34 für den Antrieb 26 ermittelt wird. Indem der Antrieb 26 die Dämpfermassen 43, 44 relativ zu dem Turm 15 in Bewegung versetzt, wird Einfluss auf den Schwingungszustand des Turms 15 genommen. Es entsteht also ein geschlossener Regelkreis, in dem der neue Schwingungszustand des Turms 15 zu neuen Messwerten des Schwingungssensors 23 führt, gemäß denen der Antrieb 26 angesteuert wird.

Eine erste in dem Speicher 33 hinterlegte erste Rechenvorschrift betrifft den in Fig. 2 gezeigten Zwischenzustand, in dem der Turm 15 errichtet ist, jedoch noch keine Gondel trägt. Diese Rechenvorschrift wird angewendet, um die Schwingungen des unbelasteten Turms 15 zu dämpfen. Nach dem Aufsetzen der Gondel 14 kommt eine in dem Speicher 33 hinterlegte zweite Rechenvorschrift zur Anwendung, die auf das Schwingungsverhalten des mit der Gondel 14 belasteten Turms 15 ausgerichtet ist.

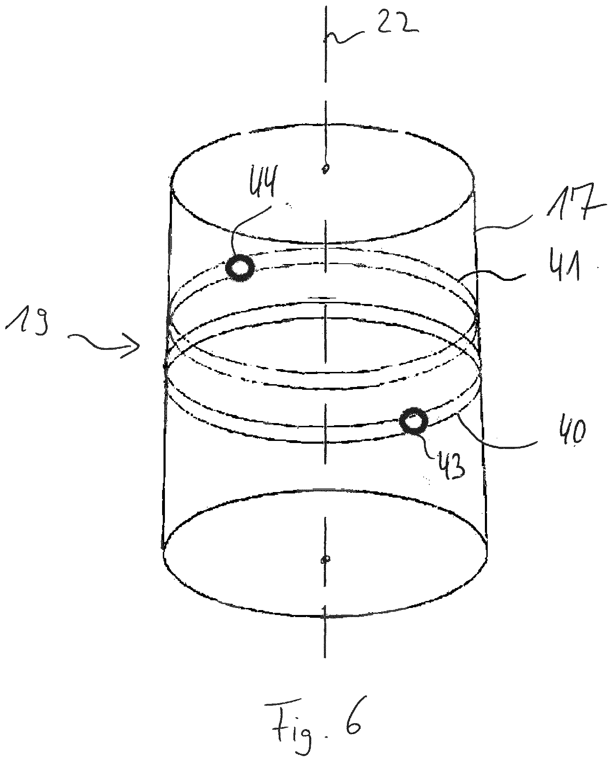

In Fig. 6 ist der Schwingungsdämpfer 19 aus den Fig. 2 und 3 in vergrößerter Darstellung gezeigt. Die Führungsschienen 40, 41, auf denen die Dämpfermassen 43, 44 laufen, erstrecken sich entlang der Innenwand eines Turmsegments 17. Ein typischer Anwendungsfall für einen solchen Schwingungsdämpfer 19 ist eine seitliche Schwingung, bei der die Schwingungsrichtung mit der zentralen Achse 22 einen rechten Winkel einschließt. Zum Dämpfen einer solchen Schwingung können die Dämpfermassen 43, 44 so angesteuert werden, dass sie sich mit übereinstimmender Winkelgeschwindigkeit gegenläufig bewegen. Dabei kann die Bewegung der Dämpfermassen 43, 44 so getaktet sein, dass sie sich in die gleiche Richtung bewegen, wenn der betreffende Bahnabschnitt parallel zur Schwingungsrichtung ausgerichtet ist und in entgegengesetzter Richtung bewegen, wenn der betreffende Bahnabschnitt orthogonal zur Schwingungsrichtung ist. Der Abstand zwischen den Dämpfermassen 43, 44 und der zentralen Achse 22 kann beispielsweise zwischen 0,5 m und 3 m liegen, die Dämpfermassen können beispielsweise eine Masse zwischen 50 kg und 150 kg haben. Die Antriebsleistung, mit der die Dämpfermassen 43, 44 entlang den umlaufenden Bahnen 21 angetrieben werden, kann beispielsweise zwischen 300 W und 1000 W liegen. Diese Werte gelten für alle Ausführungsbeispiele.

Alternativ können die Dämpfermassen 43, 44 auch so angesteuert werden, dass die Dämpfermassen 43, 44 nicht in geschlossenen Kreisbahnen umlaufen, sondern auf einem Abschnitt einer oder mehrerer der Führungsschien 40, 41 eine Vorwärts- und Rückwärtsbewegung durchführen, siehe Fig. 10. Auch auf diese Weise kann eine seitliche Schwingung gut gedämpft werden.

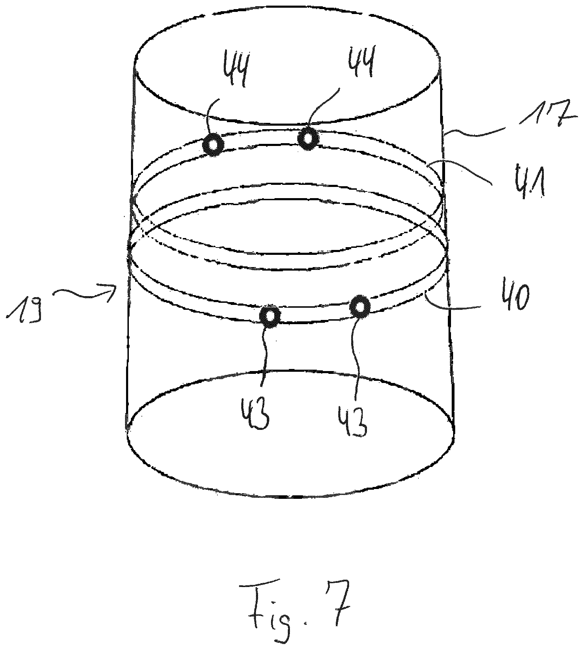

Bei der in Fig. 7 gezeigten Ausführungsform sind zwei Dämpfermassen 43, 44 auf jeder der Führungsschienen 40, 41 angeordnet. Die Dämpfermassen 43, 44 einer Führungsschiene 40, 41 bewegen sich mit gleicher Winkelgeschwindigkeit in derselben Richtung. Durch Einstellen des Abstands zwischen den beiden Dämpfermassen 43, 44 kann die für das Dämpfen wirksame Masse verändert werden. Die Dämpfwirkung ist desto größer, je näher die beiden Dämpfermassen 43, 44 beieinander sind.

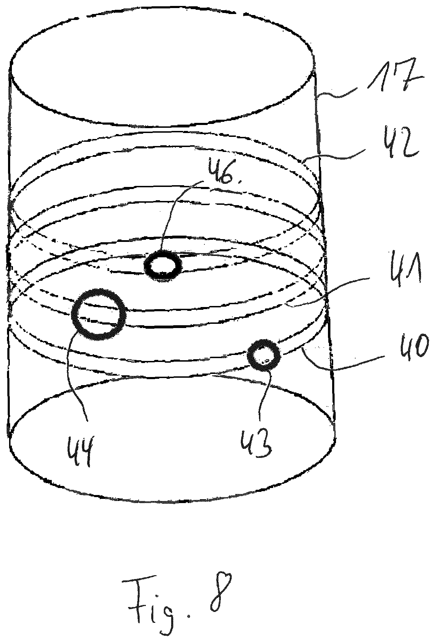

In der Variante gemäß Fig. 8 sind drei Führungsschienen 40, 41, 42 übereinander und parallel zueinander angeordnet. Die Dämpfermasse 44 auf der mittleren Führungsschiene 41 ist doppelt so groß wie die beiden anderen Dämpfermassen 43, 46. Mit einer solchen Verteilung der Dämpfermassen 43, 44, 46 kann unerwünschten Krempelmomenten entgegengewirkt werden.

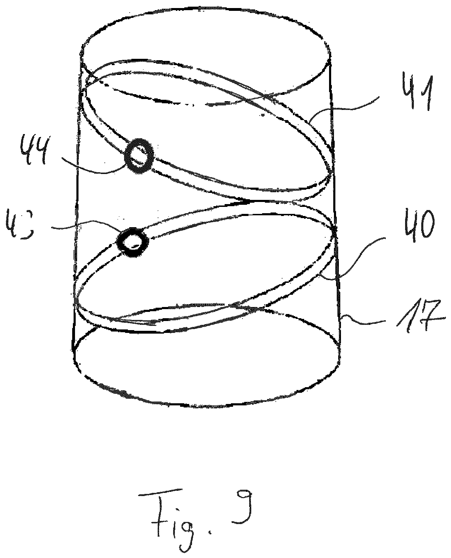

Die Fig. 9 zeigt eine weitere Variante, bei der die Führungsschienen 40, 41 sich entlang der Außenwand des Turmsegments 17 erstrecken. Zudem schließen die Führungsschienen 40, 41 keinen rechten Winkel mit der zentralen Achse 22 ein, sondern sind relativ zu dieser Achse geneigt. Außerdem sind die Ebenen der beiden Führungsschienen 40, 41 nicht parallel zueinander. Ggf. können die Ebenen der Führungsschienen 40, 41 sich schneiden. Auch eine solche Ausführungsform ist geeignet, um unerwünschte Schwingungen des Turms 15 zu dämpfen.

**Patentansprüche**

1. Schwingungsdämpfer-Vorrichtung für ein Bauwerk (15), mit einer oder mehreren Führungsschienen (40, 41, 42), wobei jede Führungsschiene (40, 41, 42) eine in sich geschlossene Wegstrecke (21) definiert, wobei auf den Führungsschienen (40, 41, 42) eine erste Dämpfermasse (43) und eine zweite Dämpfermasse (44) angeordnet sind, und mit einem Antrieb (26), um die erste Dämpfermasse (43) und die zweite Dämpfermasse (44) relativ zu den Führungsschienen (40, 41, 42) anzutreiben.

2. Schwingungsdämpfer-Vorrichtung nach Anspruch 1, **dadurch gekennzeichnet, dass** die erste Dämpfermasse (43) auf einer ersten Führungsschiene (40) angeordnet ist und dass die zweite Dämpfermasse (44) auf einer zweiten Führungsschiene angeordnet ist.

3. Schwingungsdämpfer-Vorrichtung nach Anspruch 1, **dadurch gekennzeichnet, dass** die erste Dämpfermasse (43) und die zweite Dämpfermasse (44) auf einer gemeinsamen Führungsschiene (40) angeordnet sind.

4. Schwingungsdämpfer-Vorrichtung nach einem der Ansprüche 1 bis 3, **dadurch gekennzeichnet, dass** die mit der ersten Führungsschiene (40) definierte Wegstrecke (21) und/oder die mit der zweiten Führungsschiene (41) definierte Wegstrecke (21) sich innerhalb einer Ebene (45) erstrecken.

5. Schwingungsdämpfer-Vorrichtung nach Anspruch 4, **dadurch gekennzeichnet, dass** die Ebene (45) der ersten Führungsschiene (40) parallel zu der Ebene (45) der zweiten Führungsschiene (41) ist.

6. Schwingungsdämpfer-Vorrichtung nach einem der Ansprüche 1 bis 5, **dadurch gekennzeichnet, dass** die erste Führungsschiene (40) und/oder die zweite Führungsschiene (41) eine kreisförmige Wegstrecke (21) definieren.

7. Schwingungsdämpfer-Vorrichtung nach einem der Ansprüche 1 bis 6, **gekennzeichnet durch** eine Steuereinheit (24), mit der die erste Dämpfermasse (43) und/oder die zweite Dämpfermasse (44) so angesteuert werden, dass sie sich entlang umlaufenden Bahnen auf der jeweiligen Führungsschiene (40, 41) bewegen.

8. Schwingungsdämpfer-Vorrichtung nach einem der Ansprüche 1 bis 7, **gekennzeichnet durch** eine Steuereinheit, mit der die erste Dämpfermasse (43) und/oder die zweite Dämpfermasse (44) so angesteuert werden, dass sie sich mit einer Vorwärts-/Rückwärtsbewegung entlang eines Abschnitts der jeweiligen Führungsschiene (40, 41) bewegen.

9. Schwingungsdämpfer-Vorrichtung nach einem der Ansprüche 1 bis 8, **dadurch gekennzeichnet, dass** zwei Dämpfermassen (43, 44) sich mit übereinstimmender Geschwindigkeit entlang einer Führungsschiene (40, 41) bewegen, wobei der Abstand der beiden Dämpfermassen (43, 44) einstellbar ist.

10. Schwingungsdämpfer-Vorrichtung nach einem der Ansprüche 1 bis 9, **gekennzeichnet durch** drei übereinander angeordnete Führungsschienen (40, 41, 42), wobei die Dämpfermasse (44) auf der mittleren Führungsschiene (41) größer ist als die Dämpfermasse (43) auf der unteren Führungsschiene (40) und/oder größer ist als die Dämpfermasse (46) auf der oberen Führungsschiene (42).

11. Schwingungsdämpfer-Vorrichtung nach einem der Ansprüche 1 bis 10, **dadurch gekennzeichnet, dass** der Antrieb (26) für die Dämpfermassen (43, 44) nach Art eines Linearmotors (30, 31) gestaltet ist.

12. Schwingungsdämpfer-Vorrichtung nach einem der Ansprüche 1 bis 11, **dadurch gekennzeichnet, dass** in einer zum Ansteuern der Dämpfermassen (43, 44) ausgelegten Steuereinheit (24) eine Information über den Schwingungszustand des Bauwerks verarbeitet wird.

13. Schwingungsdämpfer-Vorrichtung nach Anspruch 12, **dadurch gekennzeichnet, dass** in der Steuereinheit (24) eine erste Rechenvorschrift hinterlegt ist, die zur Anwendung bei einem Bauwerk (15) im unbelasteten Zustand bestimmt ist, und eine zweite Rechenvorschrift hinterlegt ist, die zur Anwendung bei dem Bauwerk (15, 14) im belasteten Zustand bestimmt ist.

14. Turm einer Windenergieanlage mit einer Schwingungsdämpfer-Vorrichtung nach einem der Ansprüche 1 bis 13.

15. Verfahren zum Dämpfen von Schwingungen eines Bauwerks (15), mit einer ersten Dämpfermasse (43) und mit einer zweiten Dämpfermasse (44), wobei die erste Dämpfermasse (43) und die zweite Dämpfermasse (44) auf einer oder mehreren Führungsschienen (40, 41, 42) angeordnet sind, wobei die Führungsschienen (40, 41, 42) jeweils eine in sich geschlossene Wegstrecke (21) definieren, und wobei die erste Dämpfermasse (43) und die zweite Dämpfermasse (44) relativ zu den Führungsschienen (40, 41, 42) angetrieben werden, um einer Schwingung des Bauwerks (15) entgegenzuwirken.

Fig 1

22

41

44

43

19

24

40

23

15

17

32

17

Fig. 2

16

14

41

44

19

45

43

45

24

40

23

32

17

15

17

Fig. 3

Fig. 4

Fig. 5

Fig. 6

Fig. 7

Fig. 8

Fig. 9

Fig. 10

Fig. 11

**Europäisches Patentamt**
**European Patent Office**
**Office européen des brevets**

# EUROPÄISCHER RECHERCHENBERICHT

Nummer der Anmeldung

EP 19 19 7992

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2017/036581 A1 (FM ENERGIE GMBH & CO KG [DE]) 9. März 2017 (2017-03-09) | 1-4,6, 12,14,15 | INV. F16F7/10 F03D80/80 |
| A | * das ganze Dokument * | 5,7-11, 13 | |
| | ----- | | |
| X | EP 2 543 619 A1 (SIEMENS AG [DE]) 9. Januar 2013 (2013-01-09) | 1,2,4-6, 8,10,13, 15 | |
| A | * das ganze Dokument * | 3,7,9, 11,12,14 | |
| | ----- | | |
| A,D | WO 2008/145122 A1 (VESTAS WIND SYS AS [DK]; SLOTH ERIK [DK]) 4. Dezember 2008 (2008-12-04) * Zusammenfassung; Abbildungen * | 1,14,15 | |
| | ----- | | |

**RECHERCHIERTE SACHGEBIETE (IPC)**

F16F
F03D

Der vorliegende Recherchenbericht wurde für alle Patentansprüche erstellt

| Recherchenort | Abschlußdatum der Recherche | Prüfer |
|---|---|---|
| Den Haag | 10. Februar 2020 | Kramer, Pieter Jan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 19 7992

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-02-2020

| Im Recherchenbericht angeführtes Patentdokument | Datum der Veröffentlichung | Mitglied(er) der Patentfamilie | Datum der Veröffentlichung |
|---|---|---|---|
| WO 2017036581 A1 | 09-03-2017 | CN 108350969 A | 31-07-2018 |
| | | DK 3341627 T3 | 06-01-2020 |
| | | EP 3341627 A1 | 04-07-2018 |
| | | JP 2018529901 A | 11-10-2018 |
| | | KR 20180044383 A | 02-05-2018 |
| | | PT 3341627 T | 11-12-2019 |
| | | US 2018252287 A1 | 06-09-2018 |
| | | WO 2017036581 A1 | 09-03-2017 |
| EP 2543619 A1 | 09-01-2013 | CN 202946603 U | 22-05-2013 |
| | | EP 2543619 A1 | 09-01-2013 |
| WO 2008145122 A1 | 04-12-2008 | AT 517216 T | 15-08-2011 |
| | | EP 2167748 A1 | 31-03-2010 |
| | | US 2010243392 A1 | 30-09-2010 |
| | | WO 2008145122 A1 | 04-12-2008 |

EPO FORM P0461

Für nähere Einzelheiten zu diesem Anhang : siehe Amtsblatt des Europäischen Patentamts, Nr.12/82

**EP 3 636 951 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008145122 A1
- DE 202016005517 U1
- WO 2008071428 A1
- WO 2013017244 A2